# EUROPEAN PATENT SPECIFICATION

(11) **EP 2 034 218 B1**
(45) Date of publication and mention of the grant of the patent: **04.04.2012**
(21) Application number: 07016782.0
(22) Date of filing: 28.08.2007
(51) Int. Cl.: F16G 13/20

(54) **Push-pull chain and actuator**
Druck-Zug-Kette und Aktuator
Chaîne de poussée et actionneur

(43) Date of publication of application: 11.03.2009
(73) Proprietor: VKR Holding A/S, 2970 Hørsholm (DK)
(72) Inventor: Soerensen, Jens Joerren, 2300 Copenhagen S (DK)

(56) References cited:
- EP-A- 1 353 031
- EP-A- 1 524 397
- EP-A- 1 764 469
- EP-A- 1 813 757
- WO-A-94/10418
- AU-B2- 516 364
- AU-B2- 516 700
- DE-A1- 10 238 192
- DE-U1- 29 604 692
- DE-U1- 29 816 102
- FR-A- 2 659 714
- GB-A- 1 484 726
- US-A- 2 602 345
- US-A- 2 715 340
- US-A- 4 941 316

## Description

### FIELD OF THE INVENTION

The present invention relates to push-pull chains for use in actuators, in particular to push-pull used in window actuators which are designed push windows with an assembled chain under compression and require that the assembled chain is capable of maintaining substantial structural rigidity and rectilinearity when extended to approximate a straight line and simultaneously provide a sufficient degree of lateral flexure. The invention also relates to an actuator that comprises such a push-pull chain.

### BACKGROUND OF THE INVENTION

In order to be able to open a window the actuator must be capable of pushing the sash under compression rather than pull it under tension the chain links must be constructed to provide substantial rigidity for the chain when it is in a straight configuration, so that the chain can transmit force to the swinging window unit for opening and closing thereof. The chain must also possess the requisite degree of lateral flexure to conform to the arcuate path traversed by swinging sash from the window frame.

GB1484726 discloses a mechanism for moving panels mounted for angular movement (in particular top and bottom hung windows) comprises: a chaincase for mounting with respect to a fixed frame and containing a sprocket and a stored drive chain which connects to the panel, a drive box, which is secured to the inside of the frame and which releasably receives the chaincase, containing a wheel driven by a cable and connected to drive, directly or indirectly via gearing, the sprocket; the chaincase being mountable on the drive box 4 in four different positions for a top hung panel, extending to the other side to allow cable to enter from the right, and extending to either side in an upside down position for use with bottom hung panels. The cable has a helically wound inner which engages teeth on wheel to turn member connected to sprocket via coupling member which engages grooves in each member to allow incremental adjustment to be made between them before they are locked together. The member can engage in either open end of the sprocket. Bolts pass through holes in the chaincase and through one of alternate sets in the drive box, and the drive box is bored to allow the cable to enter from either side. The chaincase shown is formed of upper and lower die-cast sections and an extruded aluminium portion which receives the coiled chain. As previously stated the components can be mounted so that section extends to the left or the chaincase can be turned upside down in either position of the section so that chain issues from the opposite side of the chaincase. In another embodiment section is integral with the rest of the chaincase and the whole is closed by a flat upper plate-more coils of chain being accommodated. The holes are equidistant from the centre of sprocket and arranged so that only two holes in the drive box are needed to align with the holes in all four positions. The cable can be connected to a manual or electric drive.

FR 2659714 discloses an articulated chain operating in thrust for closure actuators, comprising links exhibiting the shape of plates equipped with flat frontal edges which are capable of coming into abutment, in the stretched out configuration of the chain, with the frontal edges of the following links in order to render the chain rigid in terms of flexion.

AU 516700 discloses a window operator including: a housing having a front wall and an opening formed through that wall; a chain at least partially contained within said housing and being adapted to project through said housing opening for connection to a window, and chain being of the pivoted link type which is flexible laterally in one direction only; and a guide member mounted on said housing for relative sliding movement between an operative extended position in which it projects beyond said front wall at one side of said opening to support portion of said chain projecting out of said opening, and an inoperative retracted position in which there is substantially no projection of said guide member beyond said front wall, said guide member being arranged relative to said chain so that in said operative extended position said guide member supports said chain portion against lateral movement in a direction opposite to said one direction.

US 4,941,316 discloses a push-pull chain for use in a window or door actuator. This known chain comprises a series of links hinged together by pins, the links being provided with faces or lugs which abut in a manner to allow the chain to bending by rotation of the links about their hinges beyond a straight line in one direction only in a very limited extend, but which allow the chain to bend freely in the opposite direction.

Such a chain can transmit compression when the actuator is provided with suitable guides at one or both of its two ends, which guides urge the ends each over a length of one or more links into a configuration in which the chain is bended beyond a straight line with the lugs abutting with one another.

A chain of this known type may thus be employed to transmit both tension and compression round bends, by passing it over a suitable sprocket, it being understood that the bend round the pulley must be in the direction in which the chain is free to bend. A guide sheave, concentric with the pulley must be provided to prevent the chain being pushed off the sprocket when transmitting a compression load.

### OBJECT OF THE INVENTION

A major challenge in the construction of window actuators is the desire to realize a slim actuator that is powerful and reliable. The actuators are required be slim so that they can be integrated into the window frame or sash, as opposed to mounted onto the sash which has been the practice for nearly all conventional actuators. Since there is relatively much place in the direction parallel to the longitudinal extension of the window profiles the limitation in actuator length is usually not critical. However, the limitations posed by the space available inside the window frame in the traverse direction is very critical. Powerful and robust actuators require chains with a substantial cross sectional area, correspondingly large sprockets to drive the chain, transmissions with large gearwheels to transmit the required tongue, large electric drive motors to provide the required torque and effective chain guides at the chain exit to ensure the correct angle of the chain section extending from the chain exit. Each of these requirements tends to increase the traverse dimensions of the actuator housing, hence the dilemma. It is therefore an object of the invention to provide a window or door actuator and a chain for a window or door actuator that is slim, powerful and robust.

### DISCLOSURE OF THE INVENTION

This above object is achieved by providing an actuator for opening and closing a swinging window or door, according to claim 1.

The inventors of the present invention realized that the flexure of the chain caused by the actuate path of the window or door causes only the lugs on the inner side of the arc described by the flexing chain to abut with one another to prevent bending of the chain substantially beyond a straight line whilst neighboring lugs of the links on the outer side of the chain are separated by the flexure of the chain and do therefore not contribute to the stiffness of the chain. Thus, the inventors arrived at the insight that the lugs on the "outer" side of the arc can be removed without reducing the capacity of the chain to transmit compression. Several advantages are obtained by removing the lugs. One at advantage is the reduced height of the chain on one of its sides, which allows the housing of an actuator to be constructed more slim and compact. Another advantage is the fact that conventional and thus cheap transmission chain links can be used on one side of the chain, as opposed to the relatively expensive special links otherwise used in push-pull chains. The chain also becomes lighter by removing the lugs of the links on one side of the chain.

Preferably, the actuator comprises a bracket configured to urge the external portion of the chain to bend in the opposite direction.

By using the bracket to urge the chain into the correct configuration for transmitting compression a chain guide at the chain exit of the actuator can be avoided, if the chain is relatively robust and the maximal extension of the chain is relatively short. An actuator without a chain guide can be constructed with reduced transverse dimensions, which renders it easier to integrate the actuator into a frame of a sash, a window frame, a door or a door frame.

Advantageously, the actuator is not provided with a chain guide or other means for urging the chain to bend in the opposite direction, so that the actuator may be constructed very slim.

The pair of links that forms the extremity of the external portion of the chain may not be able to pivot relative to the bracket, so that the bracket can determine the orientation of this pair of links.

The bracket may be configured to position the pair of links that forms the extremity of the external portion of the chain at a small angle with direction of movement of the chain in and out of the chain exit. Thus, the chain is urged into a configuration in which it is capable of transmitting compression.

Preferably, at least one of the inner links is formed by a plate member with a link part and a flange part for attachment to the movable panel or the fixed opening.

The flange part may include an L-shaped portion, with one arm of the L extending substantially parallel with the pair of links that forms an extremity of the push-pull chain.

Preferably, the bracket comprises an arm that extents along a side of the actuator housing when the chain is in its most retracted position.

Thus, the bracket can extend to the side of the actuator opposite of the chain exit. This enables the bracket to be connected to a window or door profile by releasable fastening means in a position that can be reached with a tool for releasing the fastening means even when the door or window is closed. This is an advantage for emergency opening of the door or window when the actuator is out of order, for example to you to a power failure.

Preferably, the side of the actuator housing comprises an indentation for receiving a portion of the arm.

Further objects, features, advantages and properties of the chains and actuators according to the invention will become apparent from the detailed description.

### BRIEF DESCRIPTION OF THE DRAWINGS

In the following detailed portion of the present description, the invention will be explained in more detail with reference to the exemplary embodiments shown in the drawings, in which
Fig. 1 is an elevated view of an actuator according to the invention,
Fig. 1a is a cross-sectional view through the top window frame profile and top sash profile of a bottom hung window in an open position and showing a chain and an actuator according to the invention,
Figs. 2 and 3 are another elevated views of the actuator shown in Fig. 1,
Figs. 4 and 5 are an elevated sectional views of the actuator shown in Fig. 1,
Figs. 6 to 17 show various side, top, sectional and perspective views on a portion of the chain according to several possibilities, and
Fig. 18 is a worked open view of a chain according to other possibilities.

### DETAILED DESCRIPTION OF PREFERRED EMBODIMENTS

In the following detailed description, the invention will be described by the preferred embodiments.

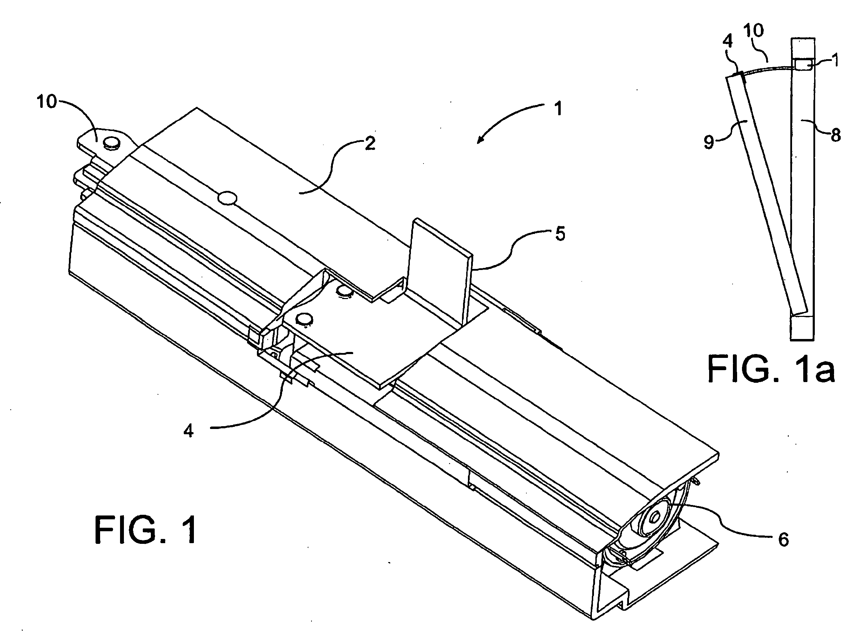

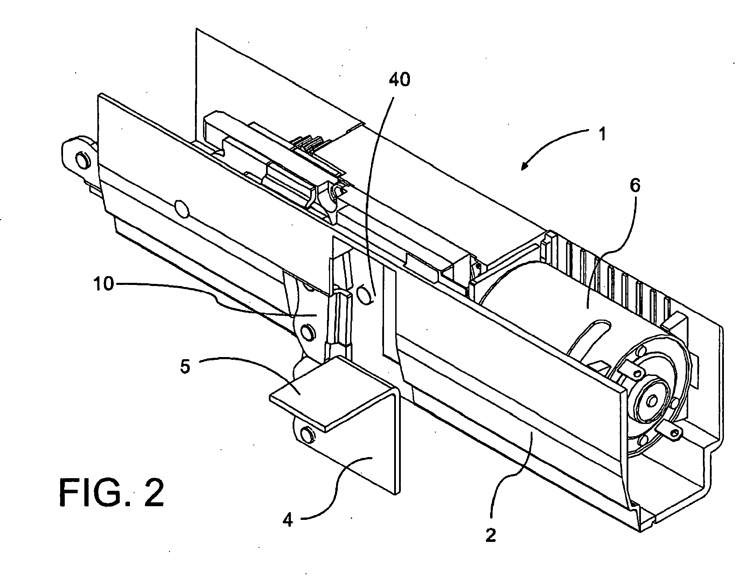

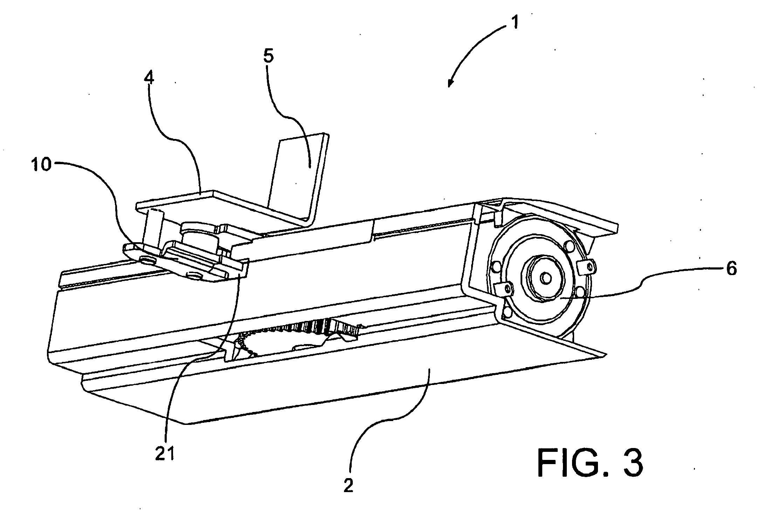

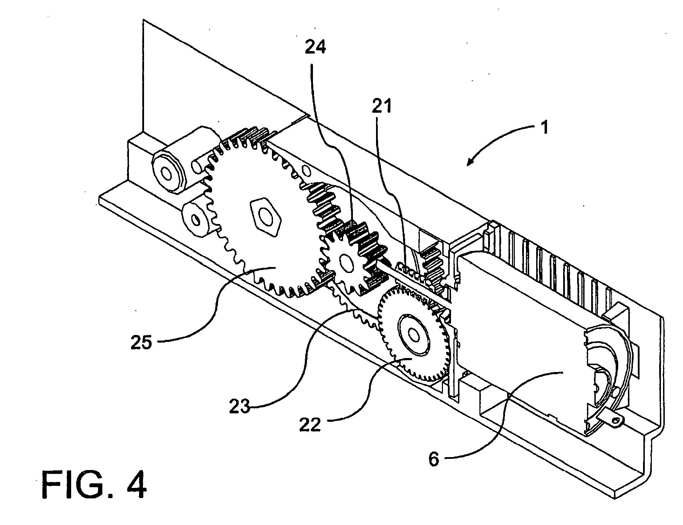

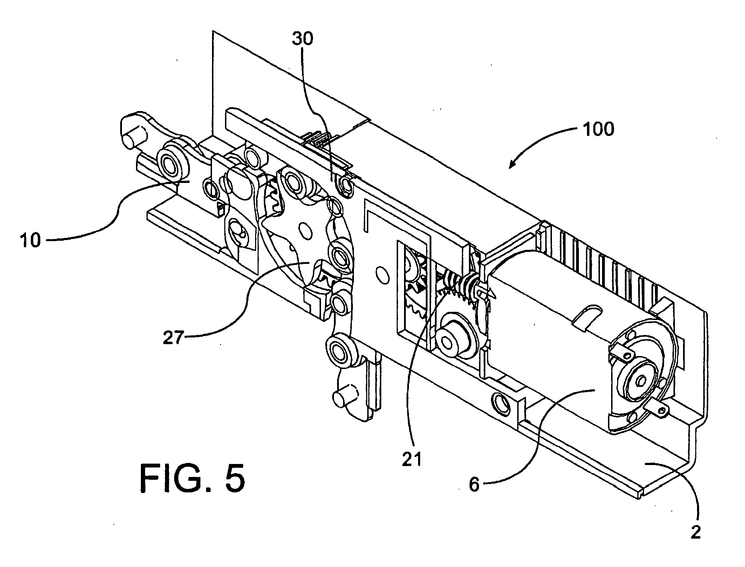

With reference to Figs. 1,1a, 2-5 a push-pull chain actuator 1 according to the invention is shown in elevated sectional and non-sectional views. The actuator 1 is intended to be mounted in or on a window frame 8 (shown mounted on the frame 8). The window frame 8 holds a sash 9 to which the external extremity of the actuator chain 10 is connected. The actuator 1 can be embedded in a slot in a profile of the window frame is desired. The external extremity of the chain 10 extending from the actuator 1 is fastened to a profile of the sash by means of a bracket 4. The chain is of the type that can bend freely beyond a straight line in one direction but only to a limited extent in the opposite direction. This type of chain is such well-known for push pull chain and actuators. An example of a chain 10 is described in detail further below. The angular movement of the sash forces the chain 10 to bend. Thus, a certain amount of sideward flexibility is required from the chain 10.

The actuator 1 comprises a longitudinal housing 2 formed by two complementary housing shells, that can be made by a die-casting process in zinc or another suitable metal or alloy or by injection molding of a plastic or fiber reinforced plastic. The housing 2 is provided on one of its sides with a chain exit aperture 21 through which the chain extends from the inside of the housing 2 to the window sash 9. In order to minimize the cross-sectional area of the actuator, and especially the width of the actuator housing in the direction of the chain exit 21, the chain exit 21 is not provided with any substantial chain guide means that are present in most conventional actuators that operate with a stiff push pull chain. Instead the housing 2 is provided with a slot 40 in which a portion of the bracket 4 is received and guided. The bracket includes an attachment legend number 5 for facilitating the connection between the bracket 4 and the sash 9.

The slot 40 is disposed above the chain exit aperture and extends in the direction of the chain movement trough the aperture 21. The slots 40 guides and receives the bracket 4.

The chain 10 is driven by a sprocket 27. The sprocket 27 is connected to an electric drive motor 6 via a transmission that includes a plurality of gear wheels. These gears include a worm 21 on the drive shaft of the drive motor 6. The worm 21 engages a wormwheel 22. A further reduction gearing between the wormwheel 22 and the sprocket 27 includes gear wheels 23,24 and 25.

A guide plate 30 guides the chain in a curve around the sprocket 27. The internal portion of the chain 10 is stored in a chain magazine 31.

It is noted that the actuator described above can be operated with a conventional push pull chain or with a push pull chain as described below.

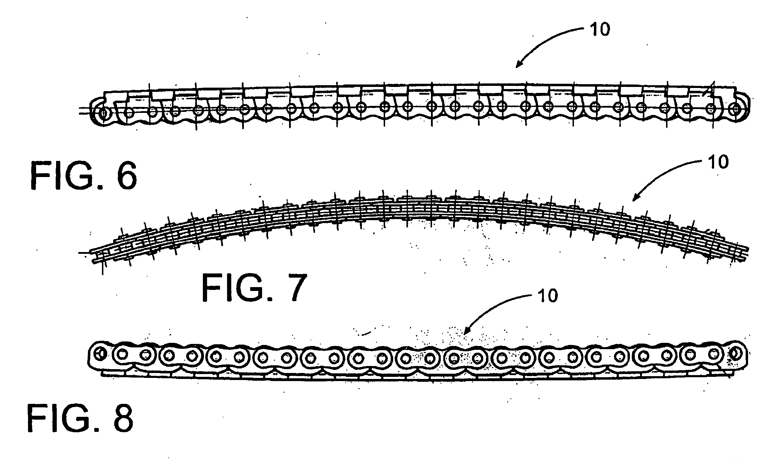

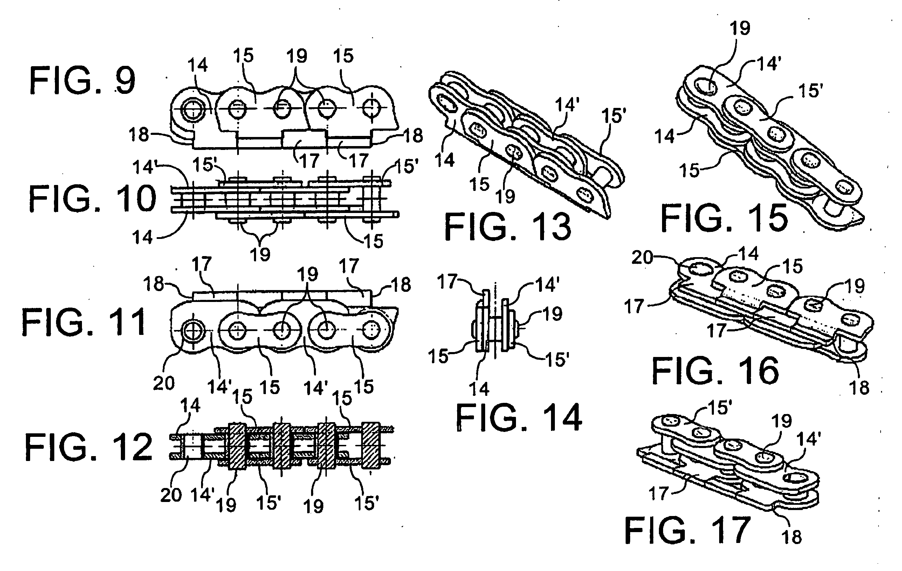

Figures 6-17 show an example of a chain in various views and from various angles.
The chain 10 includes a plurality pairs of inner links 14,14' and outer links 15,15'. Alternate pairs of the inner links 14,14' are sequentially coupled to alternate pairs 15,15' of the outer links by parallel drive pins 19 with bushings 20 that separate the pairs of inner links 14,14' and outer links 15.

The inner links 14 and the outer links 15 on one side of bushings 20 are shaped to allow the chain 10 to bend freely past a configuration in which the chain forms a straight line in one direction and only to a limited extend in the opposite direction. The inner links 14' and the outer links 15' on the other side of the bushings 12 allow the chain 10 to bend in both directions.

The inner links 14 and/or the outer links 15 that allow the chain to bend only to a limited extend are provided with lugs 17 that have abutment faces 18 for abutment with the abutment faces 18 of the lugs 17 of neighboring links 14,15 to limit the extend in which the chain 10 can be bend in the opposite direction.

The inner links 14' and the outer links 15' that allow the chain to freely bend on both directions are not provided with such lugs and the height of the chain (10) on thus one side of the chain is therefore substantially lower than the height of the chain on the other side.

The inner links 14' on the other side have a reduced height that is less than the height of the inner links 14 that are provided with lugs for providing and increased bearing/contact surface for the inner side surface of the links 14'.

This side of the chain 10 with the links 14' and 15' that do not limit the freedom of movement of the chain can be easier pressed together than the links 14 and 15 on the other side of the chain 10. As mentioned above, the chain needs to be flexible in a sideward direction in order to be able to curve between the tilted sash 9 and the window frame 8. However, with the window chain actuator be sidewards bending is always in one and the same direction. Thus, it is sufficient if the chain is flexible sidewards in only one direction from the configuration in which the chain forms a straight line. The chain 10 will be placed such that the links 14' and 15' that do not limit the freedom of moment of the chain are placed on the radio inner side of the sideward curve of the chain 10. The links 14 and 15 that limit the freedom of moment of the chain and there are provided with the lugs 17 are placed on the radio the outer side of the sideward curve of the chain 10. Since the links 14' and 15' do not need to have abutment faces they can be arranged with a intermediate between them that facilitates compression of this side of the chain when the chain is being bend sidewards. In this respect it is noted that sidewards bending of the chain is facilitated by a certain amount of play between the drive pins 19 and the bushings 20.

The chain shown in figures 6-17 is not provided with rollers. The chain as shown in figures 6-17 is provided with rollers.

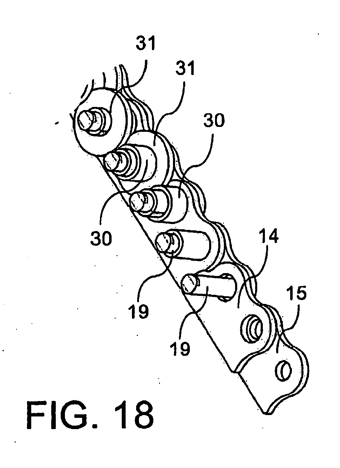

According to another example the chain is provided with pairs of rollers on each drive pin. The chain has the same improved sidewards bending flexibility in one direction as in the examples described here above. Figure 18 shows a variation of this embodiment and is provided with rollers 30,31 on the drive pins 19. The rollers 30,31 can have equal diameter (not shown) or (as shown) be of different diameter. The small diameter rollers 30 are engaged by the sprocket 27 of the actuator in which the chain is used whilst the large diameter rollers 31 engage a track that guides the chain around the sprocket 27.

The advantage of using rollers is a reduction in friction losses whilst the use of double rollers provides for a further friction reduction.

The term "comprising" as used in the claims does not exclude other elements or steps. The term "a" or "an" as used in the claims does not exclude a plurality

The reference signs used in the claims shall not be construed as limiting the scope.

Although the present invention has been described in detail for purpose of illustration, it is understood that such detail is solely for that purpose, and variations can be made therein by those skilled in the art without departing from the scope of the invention.

## Claims

1. An actuator for opening and closing a window or a door comprising:
an elongated housing with a chain path leading to a transverse chain exit;
a push-pull chain (1) at least partially received in said chain path and with its external portion extending from the chain exit;
said chain (1) having:
a plurality of pairs of inner links (14,14') and outer links (15,15'), alternate pairs of said inner links (14,14') being sequentially coupled to alternate pairs (15,15') of said outer links by parallel drive pins (19), the inner links (14) and the outer links (15) closer to a first side of the chain (1) being shaped to allow the chain (10) to bend freely past a configuration in which the chain forms a straight line in a first direction and only to a limited extend in a second opposite direction;
the inner links (14') and the outer links (15') closer to the opposite second side of the chain (1) being shaped to allow the chain (10) to bend in said first direction and in said second direction past said configuration in which the chain forms a straight line;
said chain being arranged to bend sideways on opening said window (9) or door to assume an arc with said second side defining the outer side of said arc and with only the inner links (14) and the outer links (15) closer to said first side of the chain (1) preventing bending in said second opposite direction,
**characterised in that**
at least one of the inner links (14,14) or outer links (15,15') of a pair of links that forms an extremity of the push-pull chain is shaped as an L-shaped bracket with a link part and a flange part (5), said bracket being for connecting the push pull chain to said movable panel or to said fixed opening by attachment of said flange part (5) to said movable panel or said fixed opening, said bracket being movable from a retracted position to a position extending from the chain exit.

2. The actuator of claim 1, said flange part (5) comprises an arm extending along a side of the actuator housing when said chain is in its most retracted position.

3. The actuator of claim 1 or 2 said bracket (4) being configured to urge the external portion of the chain to bend in the opposite direction.

4. The actuator (1) according to any of claim 2, wherein said side of the actuator housing (2) comprises an indentation for receiving a portion of said bracket.

## Patentansprüche

1. Stellantrieb zum Öffnen und Schließen eines Fensters oder einer Tür, umfassend:
ein längliches Gehäuse mit einer Kettenspur, die zu einem quer verlaufenden Kettenausgang führt;
eine Druck-Zug-Kette (1), die mindestens teilweise in der Kettenspur aufgenommen ist und deren äußerer Abschnitt sich von dem Kettenausgang wegerstreckt;
wobei die Kette (1) aufweist:
mehrere Paare vorn Innenlaschen (14, 14') und Außenlaschen (15, 15'), wobei abwechselnde Paare von Innenlaschen (14, 14') durch parallele Stifte (19) mit abwechselnden Paaren (15, 15') von Außenlaschen sequenziell gekoppelt sind, wobei die Innenlaschen (14) und die Außenlaschen (15), die näher bei einer ersten Seite der Kette (1) angeordnet sind, ausgestaltet sind, um zu gestatten, dass sich die Kette (10) frei über eine Konfiguration hinaus, in welcher die Kette eine gerade Linie in einer ersten Richtung bildet und nur in einem begrenzten Ausmaß in einer entgegengesetzten, zweiten Richtung biegen lässt;
wobei die Innenlaschen (14') und die Außenlaschen (15'), die näher bei der entgegengesetzten zweiten Seite der Kette (1) angeordnet sind, derart ausgestaltet sind, dass sie ermöglichen, dass sich die Kette (10) in der ersten Richtung und in der zweiten Richtung über die Konfiguration hinaus biegen lässt, in welcher die Kette eine gerade Linie bildet;
wobei die Kette derart angeordnet ist, dass sie sich beim Öffnen des Fensters (9) oder der Tür seitwärts biegt, um die Form eines Bogens anzunehmen, wobei die zweite Seite die äußere Seite des Bogens definiert und wobei nur die Innenlaschen (14) und die Außenlaschen (15), die näher der ersten Seite der Kette (1) angeordnet sind, ein Biegen in die zweite, entgegengesetzte Richtung verhindern,
**dadurch gekennzeichnet, dass**
mindestens eine der Innenlaschen (14, 14) oder der Außenlaschen (15, 15') eines Paars von Laschen, welches ein Ende der Druck-Zug-Kette bildet, als eine L-förmige Konsole mit einem Laschenteil und einem Flanschteil (5) ausgestaltet ist, wobei die Konsole zum Verbinden der Druck-Zug-Kette mit der beweglichen Platte oder mit der festen Öffnung durch Befestigen des Flanschteils (5) an der beweglichen Platte oder der festen Öffnung ausgestaltet ist, wobei die Konsole von einer zurückgezogenen Position in eine sich aus dem Kettenausgang herauserstreckende Position bewegbar ist.

2. Stellantrieb nach Anspruch 1, wobei der Flanschteil (5) einen Arm umfasst, der sich eine Seite des Stellantriebgehäuses entlang erstreckt, wenn sich die Kette in ihrer am weitesten zurückgezogenen Position befindet.

3. Stellantrieb nach Anspruch 1 oder 2, wobei die Konsole (4) ausgestaltet ist, um den äußeren Abschnitt der Kette zu veranlassen, sich in die entgegengesetzte Richtung zu biegen.

4. Stellantrieb (1) nach Anspruch 2, wobei die Seite des Stellantriebgehäuses (2) eine Vertiefung zum Aufnehmen eines Abschnitts der Klammer umfasst.

## Revendications

1. Déclencheur pour ouvrir et fermer une fenêtre ou une porte comprenant :
un boitier allongé avec un chemin de chaîne menant à une sortie de chaîne transversale ;
une chaîne boutante (1) reçue au moins partiellement dans ledit chemin de chaîne et dont la partie externe s'étend depuis la sortie de chaîne ;
ladite chaîne (1) présentant :
une pluralité de paires de liens intérieurs (14, 14') et de liens extérieurs (15, 15'), une paire sur deux (14, 14') desdits liens intérieurs étant couplée de manière séquentielle à une paire sur deux (15, 15') desdits liens extérieurs par des tiges d'entraînement parallèles (19), les liens intérieurs (14) et les liens extérieurs (15) plus proches d'un premier côté de la chaîne (1) étant formés pour permettre à la chaîne (10) de plier largement après une configuration dans laquelle la chaîne forme une ligne droite dans une première direction et uniquement dans une extension limitée dans une seconde direction opposée ;
les liens intérieurs (14') et les liens extérieurs (15') plus proches du second côté opposé de la chaîne (1) étant formés pour permettre à la chaîne (10) de plier dans ladite première direction et dans ladite seconde direction après ladite configuration dans laquelle la chaîne forme une ligne droite ;
ladite chaîne étant agencée pour plier de côté à l'ouverture de ladite fenêtre (9) ou porte pour former un arc avec ledit second côté définissant le côté extérieur dudit arc et avec uniquement les liens intérieurs (14) et les liens extérieurs (15) plus proches dudit premier côté de la chaîne (1) évitant le pliage dans ladite seconde direction opposée,
**caractérisé en ce**
**qu'**au moins un des liens intérieurs (14, 14) ou liens extérieurs (15, 15') d'une paire de liens qui forme une extrémité de la chaîne boutante est formé en tant que fixation en L avec une partie de lien et une partie de bride (5), ladite fixation étant formée pour relier ladite chaîne boutante audit panneau mobile ou à ladite ouverture fixe par fixation de ladite partie de bride (5) sur ledit panneau mobile ou ladite ouverture fixe, ladite fixation étant mobile d'une position rétractée à une position s'étendant depuis la sortie de chaîne.

2. Déclencheur selon la revendication 1, dans lequel ladite partie de bride (5) comprend un bras s'étendant le long d'un côté du boitier du déclencheur lorsque ladite chaîne est dans sa position la plus rétractée.

3. Déclencheur selon la revendication 1 ou 2, dans lequel ladite fixation (4) est configurée pour forcer la partie extérieure de la chaîne à plier dans la direction opposée.

4. Déclencheur (1) selon la revendication 2, dans lequel ledit côté du boitier du déclencheur (2) comprend une indentation pour recevoir une partie de ladite fixation.
